Europäisches Patentamt

European Patent Office

Office européen des brevets

(11) Publication number: **0 145 672**
A2

## (12) EUROPEAN PATENT APPLICATION

(21) Application number: **84830271.7**

(22) Date of filing: **11.10.84**

(51) Int. Cl.⁴: **F 04 C 15/02**

(30) Priority: **14.10.83 IT 5382283 U**

(43) Date of publication of application: **19.06.85**
**Bulletin 85/25**

(84) Designated Contracting States: **BE DE FR GB LU NL**

(71) Applicant: **FOREDIT S.p.A., Via Viazza 5,**
**I-10021 Cambiano Torino (IT)**

(72) Inventor: **Ariolfo, Alberto c/o FOREDIT S.p.A., Via**
**Viazza 5, I-10021 Cambiano (Torino) (IT)**

(74) Representative: **Bosotti, Luciano et al, c/o**
**Jacobacci-Casetta & Perani S.p.A. Via Alfieri, 17,**
**I-10121 Torino (IT)**

(54) **Distributor device for bidirectional pumps.**

(57) The device is intended to be associated with a bidirectional pump (P) having two delivery ducts (D₁, D₂) supplied alternatively with pumped liquid. The device (1) comprises a distribution chamber with two compartments (8, 9) each of which is connected to a respective delivery duct (D₁, D₂) to the pump. The two compartments (8, 9) are separated by a flexible diaphragm (4) which, when one of the compartments (8, 9 respectively) is supplied by the pump through its respective delivery duct (D₁, D₂) closes the supply path to the other compartment (9, 8 respectively), preventing the onset of surge phenomena.

- 1 -

## Distributor Device for Bidirectional Pumps

The present invention relates to distributor devices for pumps including first and second delivery ducts supplied alternatively with a pumped fluid.

Pumps of the type specified above, referred to as bidirectional pumps, are currently used in industry. In some models of motor cars, for example, a bidirectional pump permits the nozzles of the screen washers associated with the windscreen and the rear screen to be supplied with washing liquid drawn from a single reservoir.

The bidirectional pumps used most commonly include a pumping element (impeller) rotatable in two opposite directions within an annular or discoidal pumping chamber from which two delivery ducts branch in tangential directions. These ducts are supplied alternatively in dependence on the direction of rotation of the pumping element.

The pumps in use at present particularly in the motor-car field, have a disadvantage arising from the fact that, when one of the delivery ducts or the distribution members (for example, the nozzles) downstream thereof is obstructed, even partially, the operation of the pump in the direction intended to discharge liquid from the obstructed duct produces, in addition to an insufficient or nil delivery from this duct, an undesirable discharge of liquid from the other delivery duct.

- 2 -

The object of the present invention is to provide a distributor device which is simple and economical to manufacture, and can be associated with a bidirectional pump with a view to eliminating the disadvantage described above, s. as to improve significantly the functioning of the pump.

According to the present invention, this object is achieved by virtue of a distributor device for pumps including first and second delivery du.ts supplied alternatively with a pumped fluid, characterised in that it comprises :

- a housing defining a distribution chamber for the pumped fluid;

- a flexible diaphragm which subdivides the distribution chamber into first and second compartments separated from each other by a fluid-tight seal;

- a plurality of ducts within the housing, defining a first flow path through the first compartment of the distribution chamber and a second flow path through the second compartment of the distribution chamber; the first and second flow paths being connectible, respectively, with the first delivery duct and the second delivery duct of the pump;

- . shutter means associated with the flexible diaphragm for closing the first flow path and the second flow path alternatively; the arrangement being such that, when the device is in use, the supply of pumped fluid to the first flow path causes the deformation of the flexible diaphragm in the direction corresponding to an increase in the volume of the first compartment of the distribution chamber and the closing of the second flow path by the shutter means, while the supply of pumped fluid to the second flow path causes the

- 3 -

deformation of the flexible diaphragm in the direction corresponding to an increase in the volume of the second compartment of the distribution chamber and the closing of the first flow path by the shutter means.

By virtue of these characteristics, a distributor device for bidirectional pumps is provided which can improve significantly the efficiency and convenience of use of the latter, remedying the disadvantages typical of the bidirectional pumps of the prior art.

Further characteristics and advantages of the invention will become apparent from the description which follows, purely by way of non-limiting example, with reference to the appended drawings, in which:

Figure 1 is a side elevational view of a bidirectional pump for supplying the screen washers of a motor vehicle, incorporating a distributor device according to the invention;

Figure 2 is a section along the line II-II of Figure 1, and

Figure 3 is a section along the line III-III of Figure 2.

The drawings illustrate generally a hollow body consisting of a plurality of shaped parts of plastics material connected together by ultrasonic welding.

The upper part of the body illustrated in the drawings, generally indicated P, constitutes the casing (shell) of a rotary bidirectional pump substantially resembling

- 4 -

those mounted on some motor vehicles currently in production for supplying the nozzles of front and rear screen washers.

The shaped part P can be seen to consist essentially of an intake or supply duct A communicating with an approximately cylindrical pumping chamber C.

The intake duct or union A is intended to communicate with a reservoir (not illustrated) containing the washing liquid to be sprayed onto the windows of the motor vehicle.

Within the pumping chamber C is mounted a rotary pumping element (impeller) rotated by an electric motor the casing of which has a flanged edge to allow its firm connection to the part P.

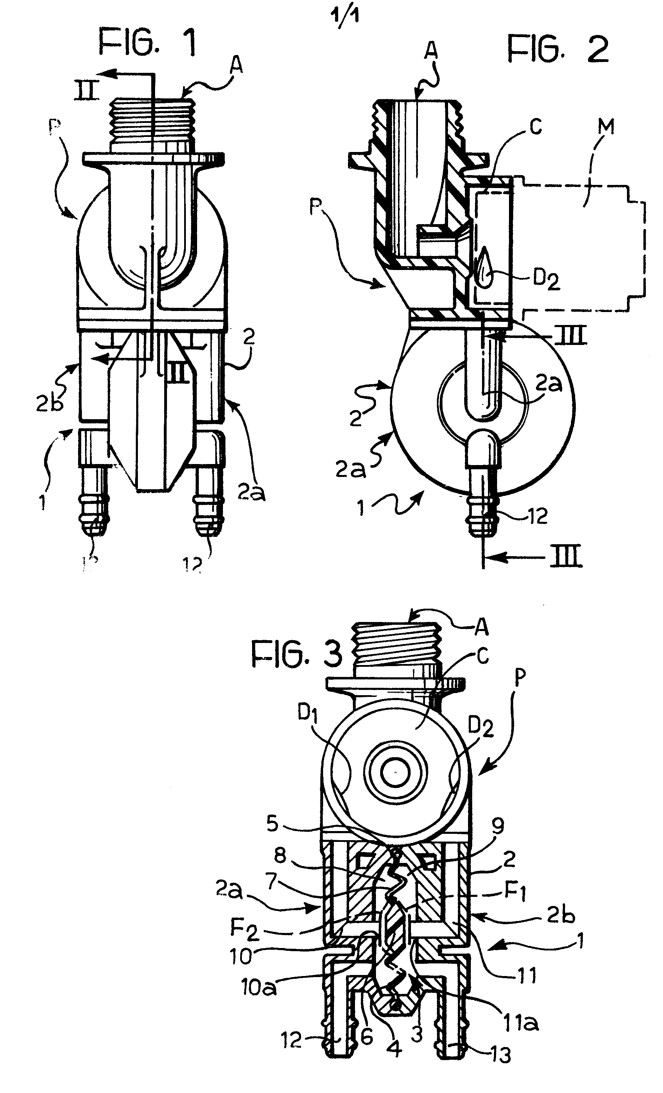

The space occupied by the motor-impeller assembly is shown in broken outline and indicated M in Figure 2.

Two delivery ducts $D_1$ and $D_2$, which transfer the pumped liquid from the chamber C to a distributor device 1 constituting the lower part of the shaped body illustrated in the drawings, extend tangentially from the pumping chamber C.

The form of the pumping chamber C is such that, when the motor M is operated, the liquid drawn in through the duct A is supplied under pressure to either the delivery duct $D_1$ or to the delivery duct $D_2$ in dependence on the direction of the impeller.

The distributor device 1 has a hollow housing 2 constituted by two halves 2a, 2b which are connected to each other and to the shaped part P by ultrasonic welding.

The half-housings 2a, 2b together define a distribution chamber 3 of approximately discoidal form, within which extends a flexible diaphragm 4 of rubber or similar material.

The diaphragm 4 has a thickened peripheral edge 5 which is clamped between the two half-housings 2a, 2b upon the firm connection of the half-housings.

Furthermore, the diaphragm 4 has a central part 6 which is also thickened, the function of which will be better explained below.

Between the edge 5 and the central part 6, the diaphragm 4 has circumferential folds or undulations 7 which facilitate its deformation.

The assembled arrangement of the diaphragm 4 is such that the chamber 3 is subdivided into two compartments 8, 9 separated from each other by a fluid-tight seal.

A first supply duct, indicated 10, connects the delivery duct $D_1$ to the compartment 8 of the distribution chamber 3.

A second supply duct, indicated 11, connects the delivery duct $D_2$ to the compartment 9 of the distribution chamber 3.

- 6 -

Finally, two discharge ducts, indicated 12 and 13, lead from the distribution chamber 3 and communicate with the compartment 8 and the compartment 9 of this chamber, respectively.

For the application to the screen-wash nozzles of a motor vehicle, the discharge duct 12 is intended to be connected, for example, to the nozzle associated with the windscreen, while the discharge duct 13 feeds the nozzle associated with the rear screen of the vehicle.

The ends of the ducts 10, 11 opposite the delivery ducts $D_1$, $D_2$ open into the distribution chamber 3 with their outlets aligned on the axis of this chamber 3, and consequently with the thickened central part 6 of the diaphragm 4.

Therefore, the arrangement is such that the deformation of the diaphragm 4 causes the thickened central part 6 to engage and close the outlet of the duct 10 or the outlet of the duct 11.

The thickened part 6 thus constitutes a movable shutter whose action is made more efficient by the presence, in correspondence with the outlets of the ducts 10 and 11, of annular projections 10a, 11a which surround these outlets and project into the chamber 3.

The deformation of the diaphragm 4 in the two directions, and the consequent movement of the thickened part 6 towards the annular projections 10a and 11a , is caused by the supply of liquid under pressure from the chamber C to the compartments 8, 9 of the chamber 3.

In particular, when the motor M is stopped, the distribution chamber 3 is emptied (not being supplied) or full of liquid at the same pressure in the compartment 8 and the compartment 9. Under such conditions, the diaphragm 4 lies in the median plane of the chamber 3.

As soon as the motor is operated, the head of the pump produces an increase in pressure in the compartment 8 or the compartment 9.

In the case in which the pump is operated in the direction that supplies the delivery duct $D_1$, the pumped liquid enters the compartment 8 through the duct 10 and then flows out of the distributor device through the discharge duct 12. The entry of the liquid under pressure into the compartment 8 causes the deformation of the diaphragm 4 in the direction corresponding to an increase in the volume of this compartment 8. Due to the deformation of the diaphragm 4, the thickened central part 6 is displaced towards the position illustrated by a broken line and indicated $F_1$ in Figure 3. In this position, the thickened part 6 abuts the annular projection 11a and closes the duct 11.

When the motor M is operated in the direction that results in the supply of the delivery duct $D_2$, however, the pumped liquid enters the compartment 9 of the distribution chamber 3 through the supply duct 11 and then flows out of the distributor device through the discharge duct 13.

Due to the pressure of the liquid, the diaphragm 4 is brought into the position illustrated by a chain line

and indicated $F_2$ in Figure 3. In this position, which corresponds to an increase in the volume of the compartment 9, the thickened central part 6 abuts the annular projection 10a and closes the supply duct 10.

The closing of the duct 11 when the liquid under pressure is supplied to the duct 10, or, vice versa, the closing of the duct 10 when the liquid under pressure is supplied to the duct 11, prevents the development of the undesirable phenomena of surge or reflux of the pumped liquid through the non-supplied duct.

Such phenomena may arise in bidirectional pumps currently in use, when the distribution members (for example, the nozzles of screen washers) downstream of the delivery duct supplied with liquid under pressure are obstructed.

Naturally, the distributor 1, which in the example illustrated is fitted directly to the body of the bidirectional pump, may constitute a separate element remotely connectible to the pump. Similarly, the flexible diaphragm 4 may exert its closing action on the discharge ducts 12, 13 instead of the supply ducts 10, 11.

0145672

- 9 -

CLAIMS

1.   A distributor device for pumps including first (D$_1$) and second (D$_2$) delivery ducts supplied alternatively with a pumped fluid,characterised in that it comprises:
-     a housing (2) defining a distribution chamber (3) for the pumped fluid;
-     a flexible diaphragm (4) which subdivides the distribution chamber (3) into first (8) and second (9) compartments separated from each other by a fluid-tight seal;
-     a plurality of ducts (10-13) within the housing (2), defining a first flow path (10, 12) through the first compartment (8) of the distribution chamber (3) and a second flow path (11,13) through the second compartment (9) of the distribution chamber(3); said first (10,12) and second (11, 13) flow paths being connectible, respectively, with the first delivery duct (D$_1$) and the second delivery duct (D$_2$) of the pump;
-     shutter means (6) associated with the flexible diaphragm (4) for closing the first flow path (10, 12) and the second flow path (11,13) alternatively; the arrangement being such that, when the device is in use, the supply of the pumped fluid to the first flow path (10,12) causes the deformation of the flexible diaphragm (4) in the direction corresponding to an increase in the volume of the first compartment (8) of the distribution chamber (3) and the closing of the second flow path (11, 13) by the shutter means, while the supply of pumped fluid to the second flow path (11, 13) causes the deformation of the flexible diaphragm (4) in the direction corresponding to an increase in the volume of the second compartment (9) of the distribution chamber (3) and the closing of the first flow path (10,

0145672

- 10 -

12) by the shutter means (6).

2.  A device according to Claim 1, characterised in that each of the flow paths (10, 12; 11, 13) comprises a supply duct (10, 11) connectible to one of the delivery ducts $(D_1, D_2)$ and having an end part (10a, 11a) opening into a respective compartment (8,9) of the distribution chamber (3), and in that the shutter means (6) associated with the flexible diaphragm (4) act on the end parts (10a, 11a) of the supply ducts (10, 11).

3.  A device according to Claim 2, characterised in that the flexible diaphragm (4) has a thickened part (6) for closing alternatively the end part (10a) of the supply duct (10) in the first flow path (10, 12) and the end part (11a) of the supply duct (11) in the second flow path (11, 13).

4.  A device according to Claim 2 or Claim 3, characterised in that the wall of the distribution chamber (3) has annular projections (10a, 11a) which surround the end parts of the supply ducts (10, 11) of the first flow path (10, 12) and second flow path (11, 13) ; said projections (10a, 11a) being able to cooperate with the shutter means (6) in a fluid-tight manner.

5.  A device according to any one of Claims 2 to 4, characterised in that the distribution chamber (3) is of substantially discoidal form, and in that the end parts (10a, 11a) of the supply ducts (10, 11) of the flow paths (10, 12; 11, 13) are arranged on opposite sides of the distribution chamber (3) in positions of substantial alignment with the main axis of the distribution chamber (3).

6. A device according to any one of the preceding claims, characterised in that the flexible diaphragm (4) is susbtantially circular and has circumferential folds (7) to facilitate its elastic deformation.

7. A device according to any one of the preceding claims, characterised in that the flexible diaphragm is made of rubber.

8. A device according to any one of the preceding claims, characterised in that the housing (2) is integral with the casing (P) of the pump.

0145672

1/1

FIG. 1

FIG. 2

FIG. 3